# EUROPEAN PATENT SPECIFICATION

(11) **EP 3 316 698 B1**
(45) Date of publication and mention of the grant of the patent: **15.03.2023**
(21) Application number: 16741740.1
(22) Date of filing: 30.06.2016
(51) Int. Cl.: A23G 4/08

(54) **GUM BASES FROM RENEWABLE SOURCES**
KAUGUMMIBASIS AUS ERNEUERBAREN QUELLEN
BASES DE GOMME ISSUES DE SOURCES RENOUVELABLES

(30) Priority: 02.07.2015 US 201562188187 P
(43) Date of publication of application: 09.05.2018
(73) Proprietor: Wm. Wrigley Jr. Company, Chicago, IL 60642 (US)
(72) Inventor: PHILLIPS, David R., Chicago, Illinois 60642 (US); MORGRET, Les D., Chicago, Illinois 60642 (US)
(74) Representative: Haseltine Lake Kempner LLP
(86) International application number: PCT/US2016/040457
(87) International publication number: WO 2017/004401

(56) References cited:
- WO-A1-00/19837
- WO-A1-99/39588
- WO-A1-02/076228
- WO-A1-2008/145120
- WO-A1-2009/007767
- WO-A1-2012/006218
- WO-A1-2012/040859
- WO-A1-2012/122459
- WO-A2-2008/068641
- WO-A2-2012/075216
- GB-A- 2 448 158
- US-A- 3 883 666
- US-A- 5 417 988
- US-A1- 2006 240 144
- US-A1- 2007 104 829
- US-A1- 2011 196 071
- US-A1- 2013 136 822
- BRIDGET A. MCGOWAN ET AL: "Formulation of Corn Zein Chewing Gum and Evaluation of Sensory Properties by the Time-Intensity Method", JOURNAL OF FOOD SCIENCE, vol. 70, no. 7, 1 September 2005 (2005-09-01), pages s475-s481, XP055301876, US ISSN: 0022-1147, DOI: 10.1111/j.1365-2621.2005.tb11495.x
- NAOKI SUGIMOTO ET AL: "Identification of the Main Constituents in Sandarac Resin, a Natural Gum Base", SHOKUHIN EISEIGAKU ZASSHI = JOURNAL OF THE FOOD HYGIENIC SOCIETY OF JAPAN, vol. 47, no. 2, 1 January 2006 (2006-01-01), pages 76-79, XP055301885, JP ISSN: 0015-6426, DOI: 10.3358/shokueishi.47.76

## Description

### BACKGROUND OF THE INVENTION

The present invention relates to gum bases and chewing gums. More specifically, this invention relates to improved chewing gum bases and chewing gums containing ingredients prepared exclusively from renewable sources.

The precursor's to today's chewing gum compositions were developed in the nineteenth century. Today's version is enjoyed daily by millions of people worldwide. Chewing gum generally consists of a water insoluble gum base and a water soluble portion along with flavors. The water soluble portions and flavors dissipate during chewing and the gum base is retained in the mouth throughout the chew.

The insoluble gum base generally comprises elastomers, resins, fats and oils, softeners, and inorganic fillers. Early chewing gum bases often used natural rubber latexes such as chicle as an elastomer. Modern gum bases commonly contain synthetic elastomers such as polyisobutylene, isobutylene-isoprene copolymers, conventional styrene-butadiene copolymers, polyisoprene, and combinations thereof. These synthetic elastomers are hydrocarbon polymers derived from petroleum or other fossil feed stocks extracted from the earth and thus have a limited supply. These supplies are not renewable or indefinitely sustainable.

Conventional gum bases used in commercial chewing gum products behave as viscous liquids which provide flow and elasticity characteristics which contribute to their desirable chewing properties. Conventional gum bases can also include elastomer plasticizers. Such elastomer plasticizers can include rosin esters, as well as other elastomer plasticizers. Gum bases may also include plastic resins such as polyvinyl acetate, polyethylene, and vinyl acetate-vinyl laurate copolymers. While some of the raw ingredients for these components may be sourced from renewable sources such as agricultural products, many are partially or totally derived from petroleum. (For purposes of this invention, the term 'petroleum' will be understood to include all fossil carbon sources such as oil, gas and coal and can be essentially understood to be the opposite of `renewable sources'.)

Additionally, the gum base can include fillers/texturizers and softeners/emulsifiers. Softeners are added to chewing gum in order to optimize the chewability and mouth feel of the gum. Softeners/emulsifiers that are typically used include waxes, hydrogenated and partially hydrogenated vegetable oils, cocoa butter, glycerol monostearate, glycerol triacetate, lecithin, and combinations thereof. Vegetable oils and fats are commonly derived from renewable sources, but many waxes are petroleum based. However, natural waxes such as beeswax and carnauba are renewably sourced.

In addition to a water insoluble gum base portion, a typical chewing gum composition includes a water soluble portion and one or more flavoring agents. The water soluble portion can include bulk sweeteners, high intensity sweeteners, flavoring agents, softeners, emulsifiers, colors, acidulants, fillers, antioxidants, and other components that provide desirable attributes.

Many of the conventional synthetic gum base components are derived from oil and petroleum products such as styrene-butadiene rubber, polyisobutylene, isobutylene-isoprene copolymer, and polyisoprene. With the limited supply of oil and petroleum products from the earth, there is a need to obtain synthetic elastomers and other chewing gum polymers from renewable and sustainable bio-sources.

Thus there is a need for a gum base and chewing gum containing the same that exhibits the desired characteristics for consumer acceptability, while also producing a chewing gum base and a chewing gum obtained from ingredients from sustainable, renewable sources.

WO 99/39588 provides for a chewing gum base and resultant chewing gum that is environmentally friendly. Environmentally friendly gum bases include polyhydroxyalkanoates.

GB 2448158 provides for a chewing gum base made from beeswax and pine rosin.

WO 2012/075216 provides for formulations for chewing gum bases and chewing gums containing polyfarnesane.

US 5417988 provides for chewing gum bases comprising natural and/or synthetic elastomeric and/or resinous components, characterized by the presence of at least 15 wt% of the total base of a triglyceride composition that displays a solid fat index (not stabilized, NMR purse) at 35 °C of at least 40 °C, while the triglycerides comprise 40-100 wt% (C₁₆ + C₁₈) saturated fatty acids, 0-60 wt% C_{18:1} fatty acids (both cis and trans) at least 30 wt% (C₁₂ + C₁₄ + C₁₆) saturated fatty acids and 0-40 wt% (C₁₂ + C₁₄) saturated fatty acids.

WO 2012/122459 discloses chewing gum bases and chewing gums containing food acceptable multi-block copolymers having at least two repeating sequences of two or more polymer blocks having at least three monomer units each.

US 2011/0196071 provides for an elastomeric composition containing at least 5% and at most 70% by weight of an ester of a starchy material, having a degree of substitution (DS) of esters between 1.0 and 3.0; at least 5 % and at most 40% by weight of a plasticizer of this ester of starchy material, said plasticizer preferably being other than water and at least 25% by weight and at most 90% by weight of a polymer other than starch chosen from elastomeric polymers, these percentages being relative to the total weight of the composition.

WO 2012/006218 provides for a chewing gum comprising a water soluble portion and a water insoluble portion. The water insoluble portion contains a cross-linked gelled gelatin matrix base and the water soluble portion contains a bulking agent made of either mannitol or erythritol or combinations thereof.

US 2013/0136822 discloses a gum base containing an elastomer which is a fraction of protein extracted from soy, and a method of preparing the elastomer.

WO 2012/040859 provides for a polyisobutene polymer comprising isobutene units derived from a renewable hydrocarbon source and having a total biobased content greater than 0%.

US 2007/104829 provides for a gum base including a) a polymer including hydrolysable units and/or a salt of a polymer including hydrolysable units and b) an elastomer.

WO 2008/145120 provides for an environmental chewing gum composition comprising at least one biodegradeable gum base polymer, at least one sweetener and at least one flavor, said composition having low tack effected by a plurality of side chains attached to the backbone of at least one gum base polymer.

US 2006/0240144 provides for biodegradeable gum bases of natural and/or synthetic polymeric components with modulated hydrophilicity, adhesive properties, compliance and elasticity.

US 3883666 provides for a chewing gum in which the gum base is made from starch derivatives, more specifically, hydroxypropyl starch acetate.

WO 02/076228 provides for a gum base comprising a polyester copolymer obtainable by the polymerization of cyclic esters and wherein the copolymer has a glass transition temperature (Tg) in the range from 20 to 38 °C.

WO 2008/068641 provides for a family of oligomers and polymers designed for use in degradable chewing gum. The polymers and oligomers possess chewing characteristics and texture traditionally desired in a chewing gum while simultaneously providing materials which, when exposed to environmental conditions, break down to non-toxic molecules readily assimilated by nature.

WO 2009/007767 provides for a compressible chewing gum composition comprising i) chewing gum granules containing gum base and ii) particles of one or more encapsulation delivery systems comprising at least one encapsulation material and at least one active ingredient being encapsulated by the encapsulation material, wherein the encapsulation material comprises at least one natural resin.

WO 00/19837 provides a gum base that is biodegradeable, which is formulated with poly(D,L-lactide acid) and poly(D,L-lactide acid-co-glycolic acid).

Journal of Food Science, Vol. 70, Nr. 7, 2005, pages 475-481 discloses natural gum bases comprising corn zein as an alternative to a synthetic gum base.

Journal of the Food Hygienic Society of Japan, Vol. 47, No. 2, pages 76-79 provides for a sandarac resin as a natural gum base.

### SUMMARY OF THE INVENTION

The present invention is defined by the appended claims. A gum base contains polymers exclusively derived from renewable and sustainable resources and chewing gums made therefrom.

### DESCRIPTION OF THE INVENTION

Over the last century, crude oil and petroleum is being extracted from the earth's resources at an increasing rate. Although new supplies of oil and petroleum are constantly being found, there still is a limited supply of these resources. These resources are not renewable nor sustainable in the future. In addition, the process of extracting and transporting petroleum and other fossil feed stocks can result in environmental damage ranging from unavoidable emissions from ongoing operations to catastrophic accidents. Thus other materials will be needed to replace these resources.

One of the replacement materials for oil and petroleum is the earth's vegetation. Vegetation such as trees, crops, wild plants and algae including biomass and agricultural waste and even waste products from industrial processes can be used as renewable and sustainable sources. After plants and crops are harvested, new vegetation can be grown. Conversion processes include a wide variety of processes such as fermentation, thermal degradation, oxidation, and dehydration, and can be used to produce elastomers and other ingredients for gum base manufacture. Examples of gum base elastomers which may be produced from renewable sources include styrene butadiene rubber (SBR), isobutylene-isoprene copolymer (butyl rubber), polyisobutylene, polyethylene, and polyvinyl acetate. These can all be manufactured from plants and vegetation that can be renewable and sustainable. These elastomers may be used in combination to obtain the quality of sensory attributes desired.

As used herein, the term 'renewable' refers to sourcing of materials which are replenished through natural processes on a human time scale such as ground water, crops and wild vegetation. As used herein, the term 'sustainable' refers to practices that may be continued indefinitely without depleting resources or causing accumulated damage to the environment and products of such practices (i.e. sustainably produced products). As used herein, the term 'green' refers to ingredients, materials, processes and products which minimize overall damage to the Earth's environment and which reduce or eliminate sourcing which is not renewable and sustainable. Thus "green" materials, ingredients, processes and products typically involve sourcing from renewable and sustainable sources, minimizing processing and/or selecting processes with minimal environmental impact, powering the production through renewable, non-polluting energy sources, minimizing waste and recycling any waste that may be generated and selecting green packaging choices. "Green" can also include waste materials used to make ingredients, such as industrial waste, biomass waste, plant and vegetation waste and recycle waste. Waste processes can include fermentation, hydration, dehydration, decomposition and degradation, oxidation, and new advances in technology.

### STYRENE BUTADIENE RUBBER

As mentioned previously, one conventional elastomer used in a variety of chewing gum bases is called styrene-butadiene rubber or SBR. According to this invention, SBR can be obtained from catalytic fast pyrolysis of biomass to "green" benzene which is converted to styrene and polymerized with "green" butadiene. "Green" butadiene can be made by use of renewable feed stocks made by biotechnology from sugarcane. This type of SBR can be used in a variety of different chewing gum and gum base formulations.

SBR will typically comprise about 1 weight% to about 30 weight% of the chewing gum base, preferably about 2 weight% to about 30 weight%, and more preferably about 5 weight% to about 20 weight% of the gum base. As a result, SBR will typically be, in various embodiments, about 0.2% to about 10% of the chewing gum formulations.

SBR can be used in a variety of different chewing gum base formulations. Gum bases may contain synthetic elastomers, may contain wax and may be wax free. SBR may be used in conventional gum base formulations, in bubble gum formulations, or non-tack gum base formulations. Gum formulations may be used for stick gums, tab gums, coated pellet gums, center filled gums, or may be sugar or sugar-free chewing gums. The insoluble gum base generally comprises elastomers, resins, fats and oils, softeners, and inorganic fillers. The gum base may or may not include wax.

The insoluble gum base can constitute approximately 5 to about 95 percent, by weight, of the chewing gum. More commonly, the gum base comprises 10 to about 50 percent of the gum, and in some preferred embodiments, 20 to about 35 percent, by weight, of the chewing gum. In an example, the chewing gum base of the present invention contains about 10 to about 50 weight percent synthetic elastomer, 0 to about 30 weight percent elastomer, about 5 to about 55 weight percent elastomer plasticizer, about 4 to about 35 weight percent filler, about 5 to about 35 weight percent softener, and optional minor amounts (about one percent or less) of miscellaneous ingredients such as colorants, antioxidants, etc.

### POLYISOBUTYLENE

Another conventional gum base ingredient is Polyisobutylene or PIB. According to this invention, PIB may be produced by obtaining "green" isobutylene or butene made by direct fermentation to a gas using microorganisms. The starting materials would be sugar, crops, agricultural and forestry waste. Alternatively, "green" isobutylene can be produced by dehydration of isobutanol.

PIB can be used in a variety of different chewing gum and gum base formulations, and will typically comprise about 1 weight% to about 30 weight% of the chewing gum base, preferably about 2 weight% to about 30 weight%, and more preferably about 5 weight% to about 20 weight% of the gum base. As a result, PIB will typically be, in various embodiments, about 0.2% to about 10% of the chewing gum formulations. PIB can be used in a variety of different chewing gum base formulations. Gum bases may contain synthetic elastomers, may contain wax and may be wax free. PIB may be used in conventional gum base formulations, in bubble gum formulations, or non-tack gum base formulations. Gum formulations may be used for stick gums, tab gums, coated pellet gums, center filled gums, or may be sugar or sugar-free chewing gums.

The insoluble gum base generally comprises elastomers, resins, fats and oils, softeners, and inorganic fillers. The gum base may or may not include wax. The insoluble gum base can constitute approximately 5 to about 95 percent, by weight, of the chewing gum, more commonly, the gum base comprises 10 to about 50 percent of the gum, and in some preferred embodiments, 20 to about 35 percent, by weight, of the chewing gum. In an example, the chewing gum base of the present invention contains about 10 to about 50 weight percent synthetic elastomer, 0 to about 30 weight percent elastomer, about 5 to about 55 weight percent elastomer plasticizer, about 4 to about 35 weight percent filler, about 5 to about 35 weight percent softener, and optional minor amounts (about one percent or less) of miscellaneous ingredients such as colorants, antioxidants, etc.

### ISOBUTYLENE-ISOPRENE COPOLYMER (Butyl rubber)

Another conventional gum base ingredient is a copolymer of isobutylene and isoprene often called butyl rubber. In this invention, butyl rubber can also be made from "green" isobutylene as discussed above and "green" isoprene. "Green" isoprene can be made by fermentation of food crops and vegetation or by thermal decomposition of forestry or agricultural waste. Butyl rubber can be used in a variety of different chewing gum and gum base formulations.

Butyl rubber will typically comprise about 1 weight% to about 30 weight% of the chewing gum base, preferably about 2 weight% to about 30 weight%, and more preferably about 5 weight% to about 20 weight% of the gum base. As a result, butyl rubber will typically be, in various embodiments, about 0.2% to about 10% of the chewing gum formulations. Butyl rubber can be used in a variety of different chewing gum base formulations. Gum bases may contain synthetic elastomers, may contain wax and may be wax free. Butyl rubber may be used in conventional gum base formulations, in bubble gum formulations, or non-tack gum base formulations. Gum formulations may be used for stick gums, tab gums, coated pellet gums, center filled gums, or may be sugar or sugar-free chewing gums.

The insoluble gum base generally comprises elastomers, resins, fats and oils, softeners, and inorganic fillers. The gum base may or may not include wax. The insoluble gum base can constitute approximately 5 to about 95 percent, by weight, of the chewing gum, more commonly, the gum base comprises 10 to about 50 percent of the gum, and in some preferred embodiments, 20 to about 35 percent, by weight, of the chewing gum. In an example, the chewing gum base of the present invention contains about 10 to about 50 weight percent synthetic elastomer, 0 to about 30 weight percent elastomer, about 5 to about 55 weight percent elastomer plasticizer, about 4 to about 35 weight percent filler, about 5 to about 35 weight percent softener, and optional minor amounts (about one percent or less) of miscellaneous ingredients such as colorants, antioxidants, etc.

### POLYETHYLENE

Polyethylene is a thermoplastic olefin polymer consisting of chains of monomer ethylene. Polyethylene can be produced in a wide ranges of molecular weights. For the purpose of this disclosure, linear polyethylene having low molecular weight are preferred, but branched polyethylene are also contemplated for use. Although polyethylene is not considered a conventional elastomer for gum base, it can be used in specialized gum bases. Like other gum base elastomers, polyethylene is conventionally obtained from oil and petroleum products. In this disclosure, polyethylene is obtained from renewable, sustainable sources such as sugar cane or corn. Sugars are fermented to ethanol and then dehydrated to ethylene. Ethylene is then polymerized to give "green" polyethylene. "Green" Polyethylene can be used in a variety of gum bases along with other "green" elastomers to give a "green" chewing gum base.

### POLYVINYL ACETATE

Polyvinyl acetate is produced from the polymerization of the vinyl acetate monomer. Vinyl acetate is made from ethylene, an oil and petroleum product, acetic acid and oxygen. If the ethylene is obtained from renewable and sustainable sources such as ethanol from cane sugar or crops through fermentation as noted above, then along with acetic acid from biosources through fermentation becomes a "green" vinyl acetate monomer. This can be polymerized into a "green" polyvinyl acetate from renewable and sustainable sources.

The gum bases of the present invention include a plastic resin which is polyvinyl acetate. Polyvinyl acetate may be used in gum bases at a level of about 5% to about 50% by weight with 10%to about 45% being preferred or about 5% to about 30% being most preferred weight average molecular weights (by GPC) for polyvinyl acetate are 2,000 to 90,000 or 10,000 to 65,000 (with higher molecular weight polyvinyl acetates typically used in bubble gum bases). Often several different molecular weights of polyvinyl acetate may be used in the same gum base formulation.

Within the limits expressed herein, the gum bases made according to this disclosure are formulated with "green" conventional gum base ingredients obtained from renewable and sustainable sources at levels normally used for their purpose. Thus, a typical gum base made according to this disclosure may typically contain one or more elastomers, elastomer plasticizers, softeners, plastic resins, fillers, colors, antioxidants and emulsifiers as well as other conventional gum base components. That said, there is no specific requirement to use any or all of these components or to use them at conventional levels as long as the resulting gum base is suitable for its purpose.

Gum bases disclosed herein comprise 3 to 30 wt.%, or 5 to 25 wt.%, or 8 to 20 wt.% of at least one synthetic elastomer from renewable and sustainable sources. These common gum base elastomers include butyl rubber (polyisobutylene-isoprene copolymer), styrene-butadiene rubber (SBR) and polyisobutylene. In some embodiments, an elastomer plasticizer may be employed to improve elasticity and compatibility of the elastomer with other gum base components. Elastomer plasticizers commonly used with synthetic elastomers include but are not limited to, rosin esters, often called estergums, such as glycerol esters of partially hydrogenated rosin, glycerol esters of polymerized rosin, glycerol esters of partially or fully dimerized rosin, glycerol esters of rosin, pentaerythritol esters of partially hydrogenated rosin, methyl and partially hydrogenated methyl esters of rosin, pentaerythritol esters of rosin, glycerol esters of wood rosin, glycerol esters of gum rosin; synthetics such as terpene resins derived from alpha-pinene, beta-pinene, and/or d-limonene; and any suitable combinations of the foregoing. These rosin esters or estergums are obtained from trees and plants and used in a variety of chewing gum bases. These are not produced from oil or petroleum, thus elastomer plasticizers are also considered "green" coming from renewable and sustainable sources. The preferred elastomer plasticizers also will vary depending on the specific application, and on the type of elastomer which is used. Where used, it may be desirable to limit elastomer plasticizer levels to the range of 1 to 32 wt.% of the gum base. Such lower levels may reduce adhesion of chewed cuds to environmental surfaces. Proper usage level will typically depend on the type and level of elastomer present as well as the desired chewing properties of the chewing gum product.

Softeners (including emulsifiers) may be added to gum bases in order to optimize the chewability and mouth feel of a chewing gum based upon the same. Softeners/emulsifiers that typically are used include various hydrogenated and partially hydrogenated vegetable oils, cocoa butter, mono- and di-glycerides such as glycerol monostearate, glycerol triacetate, lecithin, acetylated monoglycerides, and non-petroleum waxes and combinations thereof. Non-petroleum waxes include carnauba wax, beeswax, and candalilla wax and are preferred. Lecithin and mono- and di-glycerides also function as emulsifiers to improve compatibility of the various gum base components. These softeners/emulsifiers can be produced from plants and crops, thus making them "green" in terms of renewability and sustainability. Often petroleum and microcrystalline waxes are used to make gum bases, but these are made from oil and petroleum, so in order to keep the gum base formula "green", it is preferred to not use these types of waxes.

Fillers typically are inorganic, water-insoluble powders such as magnesium and calcium carbonate, ground limestone, silicate types such as magnesium and aluminum silicate, clay, alumina, talc, titanium oxide, mono-, di- and tri-calcium phosphate and calcium sulfate. Insoluble organic fillers including cellulose polymers derived from wood may be used in combination with the inorganic water-insoluble powders. If used, inorganic fillers may typically be included in amounts from about 4 wt% to about 50 wt% filler, based upon the total weight of the gum base.

Colorants and whiteners may include FD&C-type dyes and lakes, fruit and vegetable extracts, titanium dioxide, and combinations thereof. Fruit and vegetable extracts may be consider natural colors and are therefore preferred. Antioxidants such as BHA, BHT, tocopherols, propyl gallate and other food acceptable antioxidants may be employed to prevent oxidation of fats, oils and elastomers in the gum base.

The gum base described herein may include natural waxes or be wax-free. An example of a wax-free gum base is disclosed in U.S. Patent No. 5,286,500. It is preferred that the gum bases of the present invention be free of paraffin wax. Chewing gum bases of the present invention may be formulated to have good or even excellent chewing properties. By good or excellent chewing properties, it is meant that the cud will be enjoyable for consumers to chew because it is neither excessively soft nor excessively cohesive, neither excessively bouncy nor dead, not noisy or squeaky and smooth without being excessively slippery. Of course, personal preference of individual consumers will vary in regard to these properties. Formulators of ordinary skill in the art will be able to formulate gum bases within the limitations of the present invention which will satisfy the target consumer.

The disclosed gum bases can be produced using conventional mixing techniques. In such processes, the elastomers are typically first ground or shredded along with at least a portion of any desired filler. Then the ground elastomer is transferred to a batch mixer for compounding. Any standard, commercially available mixer (e.g., a Sigma blade mixer) may be used for this purpose. Compounding typically involves combining the ground elastomer with filler and elastomer plasticizer and mixing until a homogeneous mixture is produced, typically for about 30 to about 70 minutes. Thereafter, any desired additional filler and elastomer plasticizer are added followed by softeners, while mixing to homogeneity after each addition. Minor ingredients such as antioxidants and color may be added at any time in the process. While it may be possible to add a minor portion (i.e. less than 50%) of the low molecular weight polyethylene during the compounding process, it is preferred that most or all of the low molecular weight polyethylene be added to the base mixer at any time after the compounding step is completed.

Continuous processes using mixing extruders, which are generally known in the art, may also be used to prepare the gum base. In a typical continuous mixing process, initial ingredients including ground elastomer are metered continuously into extruder ports at various points along the length of the extruder corresponding to the batch processing sequence.

After the initial ingredients have mixed homogeneously and have been sufficiently compounded, the balance of the base ingredients are metered into ports or injected at various points along the length of the extruder. Typically, any remainder of elastomer component or other components are added after the initial compounding stage. The composition is then further processed to produce a homogeneous mass before discharging from the extruder outlet. Typically, the transit time through the extruder will be less than an hour.

Exemplary methods of continuous mixing include the following: (i) U.S. Pat. No. 6,238,710, which describes a method for continuous chewing gum base manufacturing, which entails compounding all ingredients in a single extruder; (ii) U.S. Pat. No. 6,086,925 which discloses the manufacture of chewing gum base by adding a hard elastomer, a filler and a lubricating agent to a continuous mixer; (iii) U.S. Pat. No. 5,419,919 which discloses continuous gum base manufacture using a paddle mixer by selectively feeding different ingredients at different locations on the mixer; and, (iv) U.S. Pat. No. 5,397,580 which discloses continuous gum base manufacture wherein two continuous mixers are arranged in series and the blend from the first continuous mixer is continuously added to the second extruder.

The completed base may be extruded or cast into any desirable shape (e.g., balls, pellets, sheets or slabs) and allowed to cool and solidify. In some cases, it may be preferable to use an underwater pelletization process for this purpose.

The gum base described herein may constitute from about 0.1 wt% to about 98 wt% by weight of the chewing gum. More typically, the inventive gum base may constitute from about 10 wt% to about 50 wt% of the chewing gum and, in various preferred embodiments, may constitute from about 20 wt% to about 35% by weight of the chewing gum.

In addition to the gum base, chewing gum typically includes a bulk portion which may include bulking agents, high intensity sweeteners, one or more flavoring agents, water-soluble softeners, binders, emulsifiers, colorants, acidulants, antioxidants, and other components that provide attributes desired by consumers of chewing gum. Any or all of these may be included in the present chewing gums.

In some embodiments, one or more bulking agent(s) or bulk sweetener(s) may be provided in chewing gums described herein to provide sweetness, bulk and texture to the chewing gum. Bulking agents may also be selected to allow marketing claims to be used in association with the chewing gums. That is, if it is desirable to promote a chewing gum as low calorie, low calorie bulking agents such as polydextrose may be used, or, if the chewing gum is desirably promoted as containing "green" ingredients, bulking agents such as isomaltulose, inulin, agave syrup or powder, erythritol, starches and some dextrins may be used. Combinations of any of the above bulking agents may also be used in the present invention.

Typical bulking agents include sugars, sugar alcohols, and combinations thereof. Sugar bulking agents generally include saccharide-containing components commonly known in the chewing gum art, including, but not limited to, sucrose, dextrose, maltose, dextrin, dried invert sugar, fructose, levulose, galactose, corn syrup solids, and the like, alone or in combination. In sugarless gums, sugar alcohols such as sorbitol, maltitol, erythritol, isomalt, mannitol, xylitol and combinations thereof are substituted for sugar bulking agents.

Bulking agents typically constitute from about 5 wt% to about 95 wt% of the total weight of the chewing gum, more typically from about 20 wt% to about 80 wt% and, still more typically, from about 30 wt% to about 70 wt% of the total weight of the chewing gum.

If desired, it is possible to reduce or eliminate the bulking agent to provide a reduced calorie or calorie-free chewing gum. In such embodiments, the gum base may comprise up to about 98 wt% of the chewing gum. Or, a low caloric bulking agent can be used. Examples of low caloric bulking agents include, but are not limited to, polydextrose; Raftilose; Raftilin; fructooligosaccharides (NutraFlora^{®}); Palatinose oligosaccharide; Guar Gum Hydrolysate (Sun Fiber^{®}); or indigestible dextrin (Fibersol^{®}). The caloric content of a chewing gum can also be reduced by increasing the relative level of gum base while reducing the level of caloric sweeteners in the product. This can be done with or without an accompanying decrease in piece weight.

For example, in these and other embodiments, high intensity sweeteners can be used alone or in combination with the bulk sweeteners. High intensity sweeteners include, but are not limited to sucralose, aspartame, salts of acesulfame, alitame, neotame, saccharin and its salts, cyclamic acid and its salts and combinations. Other high intensity sweeteners may be derived from natural sources such as glycyrrhizin, stevia and stevia derivatives such as Rebaudioside A, dihydrochalcones, lo han guo, thaumatin, monellin, etc., or combinations of these. In order to provide longer lasting sweetness and flavor perception, it may be desirable to encapsulate or otherwise control the release of at least a portion of the artificial sweetener. Techniques such as wet granulation, wax granulation, spray drying, spray chilling, fluid bed coating, coacervation, and fiber extrusion may be used to achieve the desired release characteristics.

Usage level of the high intensity sweetener will vary greatly and will depend on such factors as potency of the sweetener, rate of release, desired sweetness of the product, level and type of flavor used and cost considerations. Generally speaking, appropriate levels of high intensity sweeteners thus may vary from about 0.02 wt% to about 8 wt%. When carriers used for encapsulation are included, the usage level of the encapsulated sweetener will be proportionately higher.

A variety of natural or artificial flavoring agents, and may be used in any number or combination, if desired. Flavoring agents may include essential oils, natural extracts, synthetic flavors or mixtures thereof including, but not limited to, oils derived from plants and fruits such as citrus oils, fruit essences, peppermint oil, spearmint oil, other mint oils, clove oil, oil of wintergreen, anise and the like.

Artificial flavoring agents and components may also be used. Sensate components which impart a perceived tingling or thermal response while chewing, such as a cooling or heating effect, also may be included. Such components include cyclic and acyclic carboxamides, menthol and menthol derivatives such as menthyl esters of food acceptable acids, and capsaicin among others. Acidulants may be included to impart tartness.

The desired flavoring agent(s) can be used in amounts of from approximately 0.1 wt% to about 15 wt% of the gum, and preferably, from about 0.2 wt% to about 5 wt%.

Water-soluble softeners, which may also be known as water-soluble plasticizers, plasticizing agents, binders or binding agents, generally constitute between approximately 0.5 wt% to about 15 wt% of the chewing gum. Water-soluble softeners may include glycerin, propylene glycol, and combinations thereof.

Syrups or high-solids solutions of .sugars and/or sugar alcohols such as sorbitol solutions, hydrogenated starch hydrolysates (HSH), corn syrup and combinations thereof, may also be used. In the case of sugar gums, corn syrups and other dextrose syrups (which contain dextrose and significant amounts higher saccharides) are most commonly employed. These include syrups of various DE levels including high-maltose syrups and high fructose syrups. In some cases, low-moisture syrups can replace some or all of the bulking agents typically use, in which case usage levels of the syrup may extend up to 50 wt.% or more of the total gum composition. In the case of sugarless products, solutions of sugar alcohols including sorbitol solutions and hydrogenated starch hydrolysate syrups are commonly used.

Also useful are syrups such as those disclosed in US 5,651,936 and US 2004-234648. Such syrups serve to soften the initial chew of the product, reduce crumbliness and brittleness and increase flexibility in stick and tab products. They may also control moisture gain or loss and provide a degree of sweetness depending on the particular syrup employed.

In some embodiments, an active agent such as a drug, a dental health ingredients or dietary supplement can be used in combination with the gums and gum bases of the present invention. In such cases, the active agent may be incorporated into the gum base, the chewing gum or into associated non-gum portions of a finished product such as into a coating or a candy layer. In some cases, the active may be encapsulated to control its release or to protect it from other product ingredients or environmental factors.

The chewing gum formulations provided herein may also comprise one or more other ingredients conventional in the art, such as gum emulsifiers, colorants, acidulants, fillers, antioxidants and the like. Such ingredients may be used in the present chewing gum formulations in amounts and in accordance with procedures well known in the art of chewing gum manufacture.

Chewing gum is generally manufactured by sequentially adding the various chewing gum ingredients, including the gum base, to commercially available mixers known in the art. After the ingredients have been thoroughly mixed, the chewing gum mass is discharged from the mixer and shaped into the desired form, such as by rolling into sheets and cutting into sticks, tabs or pellets or by extruding and cutting into chunks.

In some embodiments, the chewing gum may be prepared according to a batch process. In such a process, the ingredients are mixed by first melting the gum base and adding it to the running mixer. The gum base may alternatively be melted in the mixer. Color and emulsifiers may be added at this time.

A chewing gum softener such as glycerin can be added next along with a portion of the bulking agent. Further portions of the bulking agent may then be added to the mixer. Flavoring agents are typically added with the final portion of the bulking agent. The entire mixing process typically takes from about five to about fifteen minutes, although longer mixing times are sometimes required.

In other embodiments, it may be possible to prepare the gum base and chewing gum in a single high-efficiency extruder as disclosed in U.S. Patent No. 5,543,160. Chewing gums of the present invention may be prepared by a continuous process including the steps of: a) adding gum base ingredients into a high efficiency continuous mixer; b) mixing the ingredients to produce a homogeneous gum base, c) adding at least one sweetener and at least one flavor into the continuous mixer, and mixing the sweetener and flavor with the remaining ingredients to form a chewing gum product; and d) discharging the mixed chewing gum mass from the single high efficiency continuous mixer. In yet another alternative, a finished gum base may be metered into a continuous extruder along with other gum ingredients to continuously produce a chewing gum composition.

The resultant chewing gums may be formed into sticks, tabs, chunks, tapes, coated or uncoated pellets or balls or any other desired form. In some embodiments, the chewing gum formulation may be used as a component of a greater confectionery product, for example as a center in a hard candy such as a lollipop or as one or more layers of a layered confection which also includes non-gum confectionery layers.

Of course, many variations on the basic gum base and chewing gum mixing processes are possible.

### EXAMPLES

The following examples of the invention and comparative formulations illustrate certain aspects and embodiments of the present invention, but do not limit the invention described and claimed. The elastomers used in these formulations are produced from plants and vegetation and not oil and petroleum, thus these are "green" chewing gum bases. Amounts listed are in weight percent, based upon the total weight of the gum base, or chewing gum, as the case may be.

| Table 1 | | | | | |
|---|---|---|---|---|---|
| Identification - Examples #: | 1 | 2 | 3 | 4 | 5 |
| ****SYNTHETIC ELASTOMER**** | | | | | |
| STYRENE-BUTADIENE ELASTOMER | 13.9 | 7.9 | 9.3 | 1.8 | 8.1 |
| POLYISOBUTYLENE ELASTOMER | 7.1 | -- | 7.4 | 24.8 | 3.6 |
| POLYVINYL ACETATE | 10.5 | 27.2 | 15.3 | 10.1 | 27.3 |

| ****ELASTOMER PLASTICIZERS**** | | | | | |
|---|---|---|---|---|---|
| GLYCEROL ESTERS OF ROSIN | 2.1 | -- | 19.0 | 3.7 | -- |
| GLYCEROL ESTERS OF PART HYD ROSIN | 4.3 | 18.2 | -- | 7.9 | -- |
| TERPENE RESINS | 10.8 | -- | -- | 7.1 | 26.8 |

| ****FILLER**** | | | | | |
|---|---|---|---|---|---|
| CALCIUM CARBONATE | -- | 15.9 | 20.7 | 17.7 | 11.4 |
| TALC | 25.5 | -- | -- | -- | -- |

| ****SOFTENER**** | | | | | |
|---|---|---|---|---|---|
| HYDROGENATED COTTONSEED OIL | -- | 6.0 | -- | 7.0 | -- |
| HYDROGENATED SOYBEAN OIL | 4.3 | -- | 6.1 | -- | -- |
| PARTIALLY HYDROGENATED SOYBEAN AND PALM OIL | 3.3 | 11.3 | 6.0 | 7.0 | 9.1 |
| PARTIALLY HYDROGENATED COTTONSEED OIL | 7.7 | 5.3 | 12.2 | 7.0 | 5.2 |
| GLYCEROL MONOSTEARATE | 8.2 | 7.4 | 4.0 | 3.5 | 4.8 |
| LECITHIN | 2.3 | 0.8 | -- | 2.4 | 3.7 |
| **TOTAL PERCENT** | 100.0 | 100.0 | 100.0 | 100.0 | 100.0 |

| Table 2 | | | |
|---|---|---|---|
| Identification - Examples #: | 6 | 7 | 8 |
| ****SYNTHETIC ELASTOMER**** | | | |
| STYRENE-BUTADIENE ELASTOMER | 9.3 | 9.3 | 12.8 |
| | | | |
| POLYISOBUTYLENE ELASTOMER | 5.9 | 7.3 | 2.0 |
| POLYVINYL ACETATE | 25.7 | 15.3 | 24.8 |

| ****ELASTOMER PLASTICIZERS**** | | | |
|---|---|---|---|
| GLYCEROL ESTERS OF ROSIN | 23.5 | 19.1 | 8.6 |
| GLYCEROL ESTERS OF PART HYD ROSIN | -- | -- | 8.0 |
| TERPENE RESINS | 3.2 | -- | 1.9 |

| ****FILLER**** | | | |
|---|---|---|---|
| CALCIUM CARBONATE | 15.1 | 20.7 | 9.9 |
| TALC | -- | -- | 7.2 |

| ****SOFTENER**** | | | |
|---|---|---|---|
| HYDROGENATED COTTONSEED OIL | 3.7 | 6.4 | 7.0 |
| HYDROGENATED SOYBEAN OIL | -- | -- | 10.1 |
| PARTIALLY HYDROGENATED SOYBEAN AND PALM OIL | 5.5 | 8.3 | 4.0 |
| PARTIALLY HYDROGENATED COTTONSEED OIL | 3.0 | 9.6 | -- |
| GLYCEROL MONOSTEARATE | 5.1 | 4.0 | 3.7 |
| LECITHIN | -- | -- | -- |
| **TOTAL PERCENT** | 100.0 | 100.0 | 100.0 |

| Table 3 | | | | |
|---|---|---|---|---|
| Identification - Examples #: | 9 | 10 | 11 | 12 |
| ****SYNTHETIC ELASTOMER**** | | | | |
| STYRENE-BUTADIENE ELASTOMER | 9.2 | 8.1 | 8.9 | 3.6 |
| | | | | |
| POLYISOBUTYLENE ELASTOMER | 12.7 | 8.5 | 10.0 | 11.1 |
| POLYVINYL ACETATE | 14.9 | 15.3 | 21.3 | 21.9 |

| ****ELASTOMER PLASTICIZERS**** | | | | |
|---|---|---|---|---|
| GLYCEROL ESTERS OF ROSIN | -- | 10.1 | -- | 19.6 |
| GLYCEROL ESTERS OF PART HYD ROSIN | -- | 8.9 | -- | 11.2 |
| TERPENE RESINS | 21.4 | -- | 9.7 | 3.7 |

| ****FILLER**** | | | | |
|---|---|---|---|---|
| CALCIUM CARBONATE | 13.7 | 20.9 | 21.5 | 6.4 |
| TALC | 1.4 | -- | -- | -- |

| ****SOFTENER**** | | | | |
|---|---|---|---|---|
| HYDROGENATED COTTONSEED OIL | -- | 4.2 | -- | 5.0 |
| HYDROGENATED SOYBEAN OIL | 1.7 | 10.0 | 5.0 | 4.2 |
| PARTIALLY HYDROGENATED SOYBEAN AND PALM OIL | 10.0 | 10.0 | 3.2 | 10 |
| PARTIALLY HYDROGENATED COTTONSEED OIL | 7.0 | -- | 15.0 | -- |
| GLYCEROL MONOSTEARATE | 5.7 | 4.0 | 5.4 | 3.3 |
| LECITHIN | 2.3 | -- | -- | -- |
| **TOTAL PERCENT** | 100.0 | 100.0 | 100.0 | 100.0 |

| Table 4 | | | | | |
|---|---|---|---|---|---|
| Identification - Examples #: | 13 | 14 | 15 | 16 | 17 |
| ****SYNTHETIC ELASTOMER**** | | | | | |
| STYRENE-BUTADIENE ELASTOMER | 7.4 | 10.5 | 15.4 | 10.0 | 8.3 |
| POLYISOBUTYLENE ELASTOMER | 1.9 | 7.5 | 7.9 | 1.9 | 3.6 |
| POLYVINYL ACETATE | 24.8 | 21.1 | 18.2 | 27.6 | 27.5 |

| ****ELASTOMER PLASTICIZERS**** | | | | | |
|---|---|---|---|---|---|
| GLYCEROL ESTERS OF ROSIN | -- | 15.3 | -- | -- | -- |
| GLYCEROL ESTERS OF PART HYD ROSIN | -- | 2.4 | 26.2 | -- | -- |
| TERPENE RESINS | 25.8 | 5.8 | 1.4 | 25.3 | 25.3 |

| ****FILLER**** | | | | | |
|---|---|---|---|---|---|
| CALCIUM CARBONATE | 18.6 | -- | 13.6 | 11.3 | 11.3 |
| TALC | -- | 14.8 | -- | -- | -- |

| ****SOFTENER**** | | | | | |
|---|---|---|---|---|---|
| HYDROGENATED COTTONSEED OIL | 2.0 | 4.4 | 1.2 | -- | -- |
| HYDROGENATED SOYBEAN OIL | 3.0 | 3.0 | -- | 2.4 | 4.0 |
| PARTIALLY HYDROGENATED SOYBEAN AND PALM OIL | 3.0 | 4.0 | 7.0 | 3.0 | 4.2 |
| PARTIALLY HYDROGENATED COTTONSEED OIL | 4.3 | 4.4 | -- | 7.0 | 8.3 |
| GLYCEROL MONOSTEARATE | 4.4 | 2.8 | 5.2 | 4.8 | 4.8 |
| LECITHIN | 4.8 | -- | 3.9 | 3.7 | 2.7 |
| **TOTAL PERCENT** | 100.0 | 100.0 | 100.0 | 100.0 | 100.0 |

| Table 5 | | | | |
|---|---|---|---|---|
| Identification - Examples #: | 18 | 19 | 20 | 21 |
| ****SYNTHETIC ELASTOMER**** | | | | |
| POLYISOBUTYLENE ELASTOMER | 10.1 | 6.7 | 6.6 | -- |
| STYRENE-BUTADIENE ELASTOMER | 7.0 | 5.0 | 5.0 | 5.4 |
| POLYVINYL ACETATE | 24.9 | 29.4 | 31.5 | 34.8 |

| ****ELASTOMER PLASTICIZERS**** | | | | |
|---|---|---|---|---|
| GLYCEROL ESTERS OF ROSIN | 6.8 | 10.7 | 19.8 | 16.3 |
| GLYCEROL ESTERS OF PART HYD ROSIN | -- | -- | -- | -- |

| ****FILLER**** | | | | |
|---|---|---|---|---|
| CALCIUM CARBONATE | -- | -- | -- | 30.2 |
| TALC | 34.7 | 34.1 | 21.9 | -- |

| ****SOFTENER**** | | | | |
|---|---|---|---|---|
| GLYCEROL TRIACETATE | 4.6 | 4.4 | 5.0 | 5.3 |
| GLYCEROL MONOSTEARATE | 6.9 | 8.7 | 7.9 | 5.9 |
| ACETYLATED MONOGLYCERIDE | 5.0 | 2.0 | 2.3 | 2.1 |
| **TOTAL PERCENT** | 100.0 | 100.0 | 100.0 | 100.0 |

| Table 6 | | | | | |
|---|---|---|---|---|---|
| Identification - Examples #: Generic Ingredients | 22 | 23 | 24 | 25 | 26 |
| ****SYNTHETIC ELASTOMER**** | | | | | |
| POLYISOBUTYLENE ELASTOMER | 3.9 | 6.0 | 2.0 | 6.0 | 2.0 |
| STYRENE-BUTADIENE ELASTOMER | 4.0 | 7.0 | 5.9 | 5.6 | 9.8 |
| POLYVINYL ACETATE | 34.2 | 37.1 | 34.2 | 37.8 | 35.6 |

| ****ELASTOMER PLASTICIZERS**** | | | | | |
|---|---|---|---|---|---|
| GLYCEROL ESTERS OF ROSIN | 14.8 | -- | -- | -- | -- |
| GLYCEROL ESTERS OF PART HYD ROSIN | -- | 19.8 | 14.8 | 19.8 | 19.8 |

| ****FILLER**** | | | | | |
|---|---|---|---|---|---|
| CALCIUM CARBONATE | 29.8 | 16.5 | 29.8 | -- | -- |
| TALC | -- | -- | -- | 17.0 | 19.7 |

| ****SOFTENER**** | | | | | |
|---|---|---|---|---|---|
| GLYCEROL TRIACETATE | 6.3 | 6.6 | 5.3 | 5.6 | 4.8 |
| GLYCEROL MONOSTEARATE | 4.0 | 7.0 | 5.0 | 3.2 | 2.3 |
| ACETYLATED MONOGLYCERIDE | 3.0 | -- | 3.0 | 5.0 | 6.0 |
| **TOTAL PERCENT** | 100.0 | 100.0 | 100.0 | 100.0 | 100.0 |

| Table 7 | | | | | | |
|---|---|---|---|---|---|---|
| Identification - Examples #: | 27 | 28 | 29 | 30 | 31 | 32 |
| ****SYNTHETIC ELASTOMER**** | | | | | | |
| STYRENE-BUTADIENE ELASTOMER | 10.0 | 10.0 | 5.0 | 25.0 | 9.0 | 14.1 |
| POLYISOBUTYLENE | 25.0 | 7.0 | 15.0 | -- | 16.9 | 12.1 |
| POLYVINYL ACETATE | -- | 17.0 | 30.0 | 5.0 | 22.8 | 20.8 |

| ****FILLER**** | | | | | | |
|---|---|---|---|---|---|---|
| CALCIUM CARBONATE | 25.0 | 40.0 | 5.0 | 25.0 | -- | 13.9 |
| TALC | -- | -- | -- | -- | 12.0 | -- |

| ****SOFTENERS**** | | | | | | |
|---|---|---|---|---|---|---|
| HYDROGENATED SOYBEAN OIL | 5.0 | -- | 15.0 | -- | 14.8 | 7.7 |
| HYDROGENATED COTTONSEED OIL | -- | 8.0 | -- | 15.0 | 14.0 | 10.0 |
| PARTIALLY HYDROGENATED SOYBEAN AND PALM OIL | 20.0 | 2.0 | 5.0 | 15.0 | 8.8 | 7.0 |
| PARTIALLY HYDROGENATED COTTONSEED OIL | 5.0 | 8.0 | 10.0 | 10.0 | -- | 11.7 |
| GLYCEROL MONOSTEARATE | 10.0 | -- | 5.0 | 5.0 | 1.7 | 3.7 |
| LECITHIN | -- | 8.0 | -- | -- | -- | -- |
| **TOTAL PERCENT** | 100.0 | 100.0 | 100.0 | 100.0 | 100.0 | 100.0 |

| Table 8 | | | | | | |
|---|---|---|---|---|---|---|
| Identification - Examples #: | 33 | 34 | 35 | 36 | 37 | 38 |
| ****SYNTHETIC ELASTOMER**** | | | | | | |
| BUTYL RUBBER (ISOPRENE-ISOBUTYLENE) ELASTOMER | 8.0 | 5.0 | 6.0 | 5.0 | 7.0 | 6.0 |
| STYRENE-BUTADIENE ELASTOMER | 8.0 | 4.9 | 3.9 | 5.0 | 3.0 | 7.3 |
| POLYISOBUTYLENE | 10.0 | 15.5 | 15.5 | 15.9 | 15.9 | 21.2 |
| POLYVINYL ACETATE | 14.0 | 22.0 | 22.0 | 21.7 | 21.6 | 29.1 |

| ****FILLER**** | | | | | | |
|---|---|---|---|---|---|---|
| CALCIUM CARBONATE | 5.0 | 12.9 | 12.9 | 13.3 | -- | 17.7 |
| TALC | 10.0 | -- | -- | -- | 13.1 | -- |

| ****SOFTENERS**** | | | | | | |
|---|---|---|---|---|---|---|
| HYDROGENATED SOYBEAN OIL | 11.0 | 14.0 | 9.0 | 13.3 | 13.5 | 6.1 |
| HYDROGENATED COTTONSEED OIL | 11.0 | 13.0 | 13.0 | 13.3 | 13.5 | 6.1 |
| PARTIALLY HYDROGENATED SOYBEAN AND PALM OIL | 3.0 | 10.0 | 10.0 | -- | 5.0 | 5.2 |
| PARTIALLY HYDROGENATED COTTONSEED OIL | 13.0 | -- | 5.0 | 9.8 | 4.8 | -- |
| GLYCEROL MONOSTEARATE | 2.0 | 2.7 | 1.7 | 2.7 | 2.6 | 1.3 |
| LECITHIN | -- | -- | 1.0 | -- | -- | -- |
| **TOTAL PERCENT** | 100.0 | 100.0 | 100.0 | 100.0 | 100.0 | 100.0 |

| Table 9 | | | | | | | |
|---|---|---|---|---|---|---|---|
| | Ex. 39 | Ex. 40 | Ex. 41 | Ex. 42 | Ex. 43 | Ex. 44 | Ex. 45 |
| Terpene Resin | 21.00 | 28.00 | 28.00 | 15.00 | 19.00 | 29.00 | 18.00 |
| Low MW PVAc | 31.50 | 28.00 | 16.00 | 40.00 | 21.00 | 25.00 | 21.00 |
| Hydrogenate d Veg. Oil | 14.50 | 12.00 | 18.00 | 12.00 | 10.00 | 22.00 | 15.00 |
| Beeswax | 5.00 | 5.00 | - | - | 2.00 | 3.00 | 3.00 |
| Microwax | 1.00 | - | 2.00 | - | - | - | 2.00 |
| High MW PIB | 6.00 | 14.00 | 12.00 | 10.00 | 5.00 | 4.00 | 12.00 |
| Med. MW PIB | 1.00 | - | 5.00 | - | 6.00 | 2.00 | 15.00 |
| Butyl Rubber | 16.00 | 12.00 | 13.00 | 10.00 | 15.00 | 14.00 | 7.00 |
| Calcium Carbonate | 4.00 | - | 6.00 | 12.00 | 21.00 | - | 6.00 |
| Lecithin | - | 1.00 | - | 1.00 | 1.00 | 1.00 | 1.00 |
| Total | 100.0 0 | 100.00 | 100.00 | 100.00 | 100.00 | 100.00 | 100.00 |

| Table 10 | | | | | | | |
|---|---|---|---|---|---|---|---|
| | Ex. 46 | Ex. 47 | Ex. 48 | Ex. 49 | Ex. 50 | Ex. 51 | Ex. 52 |
| Terpene Resin | 21.00 | 28.00 | 28.00 | 15.00 | 19.00 | 29.00 | 18.00 |
| Low MW PVAc | 31.50 | 28.00 | 16.00 | 40.00 | 21.00 | 25.00 | 21.00 |
| Hydrogenate d Veg. Oil | 14.50 | 12.00 | 18.00 | 12.00 | 10.00 | 22.00 | 15.00 |
| Beeswax | 5.00 | 5.00 | - | - | 2.00 | 3.00 | 3.00 |
| Microwax | 1.00 | - | 2.00 | - | - | - | 2.00 |
| High MW PIB | 6.00 | 14.00 | 12.00 | 10.00 | 5.00 | 4.00 | 12.00 |
| Med. MW PIB | 1.00 | - | 5.00 | - | 6.00 | 2.00 | 15.00 |
| Butyl Rubber | 16.00 | 12.00 | 13.00 | 10.00 | 15.00 | 14.00 | 7.00 |
| Cellulose | 4.00 | - | 6.00 | 12.00 | 21.00 | - | 6.00 |
| Lecithin | - | 1.00 | - | 1.00 | 1.00 | 1.00 | 1.00 |
| Total | 100.0 0 | 100.00 | 100.00 | 100.00 | 100.00 | 100.00 | 100.00 |

Unless defined otherwise, technical and scientific terms used herein have the same meaning as is commonly understood by one of ordinary skill in the art to which this invention belongs. Unless otherwise stated, percentages provided are percentages by weight. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced item, and the terms "front", "back", "bottom", and/or "top", unless otherwise noted, are merely used for convenience of description, and are not intended to limit what is being described to any one position or spatial orientation.

While only certain features of the invention have been illustrated and described herein, many modifications and changes will occur to those skilled in the art.

## Claims

1. A chewing gum comprising at least one sweetener, at least one flavoring agent and a water-insoluble chewing gum base comprising polymers exclusively derived from renewable sources, and
wherein the gum base comprises:
3 to 30 wt.% of at least one synthetic elastomer selected from butyl rubber, styrene-butadiene and polyisobutylene; and
a plastic resin which is polyvinyl acetate.

2. The chewing gum of claim 1 or 2, wherein the synthetic elastomer is styrene-butadiene rubber derived from a renewable source.

3. The chewing gum of claim 1 or 2, wherein the synthetic elastomer is butyl rubber derived from a renewable source.

4. The chewing gum of claim 1 or 2, wherein the synthetic elastomer is comprises polyisobutylene derived from a renewable source.

5. A chewing gum of any of claims 1 to 2 wherein the gum base further comprises an ingredient selected from the group consisting of emulsifiers, fillers, colors, antioxidants, softeners and combinations thereof.

6. A chewing gum of claim 1, wherein the gum base is free of paraffin wax.

## Patentansprüche

1. Kaugummi, umfassend mindestens einen Süßstoff, mindestens einen Geschmacksstoff und eine wasserunlösliche Kaugummibasis, umfassend Polymere, die ausschließlich aus erneuerbaren Quellen stammen, und
wobei die Gummibasis Folgendes umfasst:
3 bis 30 Gew.-% mindestens eines synthetischen Elastomers, ausgewählt aus Butylkautschuk, Styrol-Butadien und Polyisobutylen; und
ein Kunststoffharz, das Polyvinylacetat ist.

2. Kaugummi nach Anspruch 1 oder 2, wobei das synthetische Elastomer Styrol-Butadien-Kautschuk ist, der aus einer erneuerbaren Quelle stammt.

3. Kaugummi nach Anspruch 1 oder 2, wobei das synthetische Elastomer Butylkautschuk ist, der aus einer erneuerbaren Quelle stammt.

4. Kaugummi nach Anspruch 1 oder 2, wobei das synthetische Elastomer Polyisobutylen umfasst, das aus einer erneuerbaren Quelle stammt.

5. Kaugummi nach einem der Ansprüche 1 bis 2, wobei die Kaugummibasis ferner einen Bestandteil umfasst, der aus der Gruppe ausgewählt ist, die aus Emulgatoren, Füllstoffen, Farbstoffen, Antioxidantien, Weichmachern und Kombinationen davon besteht.

6. Kaugummi nach Anspruch 1, wobei die Gummibasis frei von Paraffinwachs ist.

## Revendications

1. Gomme à mâcher comprenant au moins un édulcorant, au moins un agent aromatisant et une base de gomme à mâcher insoluble dans l'eau comprenant des polymères dérivés exclusivement de sources renouvelables, et
dans laquelle la base de gomme comprend :
3 à 30 % en poids d'au moins un élastomère synthétique choisi parmi le caoutchouc butylique, le styrène-butadiène et le polyisobutylène ; et
une résine plastique qui est de l'acétate de polyvinyle.

2. Gomme à mâcher selon la revendication 1 ou 2, dans laquelle l'élastomère synthétique est un caoutchouc styrène-butadiène dérivé d'une source renouvelable.

3. Gomme à mâcher selon la revendication 1 ou 2, dans laquelle l'élastomère synthétique est un caoutchouc butylique dérivé d'une source renouvelable.

4. Gomme à mâcher selon la revendication 1 ou 2, dans laquelle l'élastomère synthétique est un caoutchouc polyisobutylène dérivé d'une source renouvelable.

5. Gomme à mâcher selon l'une quelconque des revendications 1 à 2, dans laquelle la base de gomme comprend en outre un ingrédient choisi dans le groupe constitué d'émulsifiants, de charges, de colorants, d'antioxydants, d'adoucissants et de combinaisons de ceux-ci.

6. Gomme à mâcher selon la revendication 1, dans laquelle la base de gomme est exempte de cire de paraffine.
